Europäisches Patentamt

European Patent Office

Office européen des brevets

(19)

(11) **EP 1 114 984 A1**

(12) # EUROPEAN PATENT APPLICATION

(43) Date of publication:
**11.07.2001 Bulletin 2001/28**

(51) Int Cl.⁷: **G01F 1/36**, G01F 1/44,
G01F 1/86

(21) Application number: **01200010.5**

(22) Date of filing: **04.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.01.2000 NL 1014032**

(71) Applicant: **Ir. T. Hendriks B.V.**
**6361 BH Nuth (NL)**

(72) Inventor: **Hendriks, Teunis**
**6361 BH Nuth (NL)**

(74) Representative: **Valkonet, Rutger et al**
**Octrooibureau Zuid**
**en Bureau voor Merken en Modellen B.V.**
**P.O. Box 4582**
**5601 EN Eindhoven (NL)**

(54) **Method and device for measuring the flow of steam**

(57)     The invention relates to a method for measuring the flow of steam flowing through a conduit for use by one or more steam consumers, which consumers' conduit forms part of a network of steam conduits built up of one or more insulated steam conduits, in which network the value p*v (product of absolute pressure and specific volume) of the steam is known at least one random location.

    The invention can be implemented in a network of steam conduits, in which the value p*v (product of absolute pressure and specific volume) of the steam is known at at least one random location, for example in the steam supply conduit, and which is insulated on the outside, so that practically no heat is transferred from the steam to the environment. The method according to the invention is characterized by the steps of passing the steam through a control element for adjusting the steam flow and through a constriction in the consumers' conduit, where the steam reaches the critical velocity, and measuring the steam pressure on the inlet side of said constriction; this steam pressure is a measure for the flow of the steam flowing through the constriction.

FIG.1

EP 1 114 984 A1

## Description

The invention relates to a method for measuring the flow of steam flowing through a conduit for use by one or more steam consumers, which consumers' conduit forms part of a network of steam conduits built up of one or more insulated steam conduits, in which network the value $p^*v$ (product of absolute pressure and specific volume) of the steam is known at at least one random location.

In many industrial processes, for example in the production of preserves in the vegetable and fruit processing industry, steam is used as an energy carrier. The steam is led to one or more steam consumers via a network of steam conduits. With a view to reducing the costs of energy and in connection with the social necessity of dealing with energy in an economical way (reduction of $CO_2$ emission), it is desirable that the steam consumers utilize the steam being supplied as efficiently as possible. It is in particular important to know whether the amount of steam per unit time (the steam flow) that is taken off by the steam consumers corresponds to their actual requirement.

A prior art method for measuring the flow of steam flowing through a conduit comprises the measuring of a pressure difference across a measuring flange, measuring tube or pressure sensor. Measuring the local pressure and temperature of the steam as well makes it possible to derive the steam flow from said measured values. Measuring methods of this kind employ several measuring sensors, because also the local conditions of the steam at the location of the measurement must be determined. Besides, such methods are characterized by a quadratic relation between the flow and the measured pressure difference and several measurements need to be carried out in order to obtain the desired result, and consequently such methods are relatively complex and their usefulness is limited. In addition to that, such measuring methods are susceptible to breakdowns and they easily exhibit inaccuracies.

The object of the invention is to provide a method and a device for measuring the flow of steam that does not exhibit the above drawbacks. The method is characterized by the steps of passing the steam through a control element for adjusting the steam flow and through a constriction in the consumers' conduit, measuring the steam pressure on the inlet side of said constriction and determining the flow of the steam flowing through the constriction on the basis of the measured steam pressure and the value $p^*v$ of the steam that is known at a random location.

Accordingly, the steam flow is determined by means of only one pressure measurement.

The invention can be implemented in a network of steam conduits, in which the value $p^*v$ (the product of absolute pressure and specific volume) of the steam is known at at least one location, for example in the steam supply conduit, and which is insulated on the outside, so that there is practically no transfer of heat from the steam to the environment.

The measuring principle according to the invention is based on the insight that the value $p^*v$ of the steam is approximately constant, and consequently it is independent of the local pressure or temperature in the network of conduits, as long as there is no transfer of heat from the steam to the environment (see [1]). Reference has just been made, and will be made in the following explanation of the measuring principle, to:

[1] Traupel, Walter "Thermische Turbomaschinen; Erster Band; Thermodynamisch-strömungstechnische Berechnung.", Springer-Verlag 1988, ISBN 3-540-07939-4 Springer-Verlag Berlin Heidelberg New-York.
[2] Schmidt, Ernst "Properties of Water and Steam in S.I.-Units", Springer-Verlag 1979, ISBN 3-540-09601-9 Springer-Verlag Berlin Heidelberg New-York.
[3] Fernholtz, Otto "Untersuchungen an einer Lavaldüse zur spontanen und heterogenen Kondensation bei der Expansion überhitzten Wasserdampf ins Zweiphasengebiet und deren Auswirkungen auf die kritische Massenstromdichte." 1989, Dissertation, RWTH Aachen.

In the case of an isentropic flow to within the throat of the constriction, the mass flow density in the throat of the constriction is (see [1]):

$$\rho^*c = \psi * \sqrt{(2^*\kappa/(\kappa-1) * (p_0/v_0))} \qquad (a)$$

wherein:

$\rho$ = the density of the steam in the throat of the constriction.

$c$ = the velocity of the steam in the throat of the constriction.

$\kappa$ = the isentropic exponent of the steam; it is approximately constant in the network of steam conduits; (see [2]).

$\psi$ = the through-flow function, which is only a function of K in the case of a critical flow in the throat of the constriction (see [1]).

$p_0$ = the absolute pressure of the steam just before the constriction

$v_0$ = the specific volume of the steam just before the constriction

Since $p^*v$ is constant in the entire insulated network of steam conduits (see [1]), the following applies:

$$p^*v = C_1 = P_0 * v_0 \qquad (b)$$

wherein $C_1$ = a known constant.

Insertion of (b) in (a) gives, after some computation:

$$p*c = \psi*p_0 * \sqrt{(2*\kappa/(\kappa-1) * (1/C_1))} \qquad (c)$$

Upon further consideration it appears:

- the isentropic exponent $\kappa$ is approximately constant in the network of steam conduits,
- the through-flow function $\psi$ is also constant, therefore, on condition that the flow in the throat is critical, and
- $C_1$ is constant due to the fact that $p*v$ is constant in the network of steam conduits.

When the constants are combined:

$$C_2 = \psi * \sqrt{(2*\kappa/(\kappa-1) * (1/C_1))} \qquad (d)$$

(c) can be written as:

$$\rho*c = C_2 * P_0 \qquad (e)$$

wherein C2 is approximately constant in the network.

The flow through the constriction is now determined by the mass flow density of the steam in the throat of the constriction and the area A of the passage of the throat in the constriction. Flow losses on the inlet side of the throat of the constriction are balanced in one of the usual manners, for example with a flow coefficient $\propto_D$ (see [3]); said $\propto_D$ is close to 1 since the boundary layer is extremely thin on the inlet side of the throat of the constriction (see [1]).

Thus the flow will be:

$$Q = A * \propto_D *\rho * c = A * \propto_D * C_2 * P_0$$

wherein:

Q = the flow of the steam through the constriction
A = the area of the passage of the throat of the constriction
$\propto_D$ = the flow coefficient with which the influence of the boundary layer and the flow losses are balanced.

The point of departure for a flow measurement is that the condition of the steam at one location in the network of steam conduits is known, so that the value $p*v$ is known; this does not have to be the location where a measurement takes place. Thus, when a steam boiler is used, for example, which supplies saturated steam to the network, the pressure of the steam in the steam boiler will be a good basis for determining the value $p*v$. When overheated steam is supplied from elsewhere, for example, the supply pressure and the supply temperature are for example a good measure for determining the value $p*v$ of the steam in the network.

The device for measuring the flow of steam flowing through a conduit in accordance with the invention, wherein the conduit, together with at least one steam supply conduit, forms part of a network of steam conduits, is according to the invention characterized in that said device comprises at least one constriction that can be fitted into the conduit, and a pressure sensor that can be disposed in the conduit at a location upstream of said constriction, as well as a control element for adjusting the steam flow.

The value $p*v$ of the steam in the insulated network of steam conduits is independent of the local pressure or temperature at the location where the measurement is carried out, but it is constant in the entire network. The steam flow is derived from the known value $p*v$, the measured inlet pressure on the inlet side of the constriction and the known geometry of the constriction. The relation between the pressure and the steam flow is practically linear.

The measuring device is not very complex, as it comprises simple parts, and it can be manufactured as an accurately functioning device at low cost, thus making flow measurement economically feasible for applications where this is not possible with the current measuring systems. Owing to the robust construction of the parts that are in contact with the steam, the measurement is not susceptible to breakdowns.

In one embodiment of the device, which is quickly reversible in dependence on the desired measuring situation, the constriction is made up of a conduit section disposed between flanges in the conduit. Preferably, said conduit section is shaped in such a manner that it can be built into the conduit at the location of an exiting pair of flanges, so that no changes in the existing steam conduit are required.

A more flexible reversal can be obtained in that the passage of the constriction is adjustable in one embodiment. The constriction may thereby include a valve body, which is movable within said constriction.

According to the invention, a device that can be used in various measuring ranges and/or for large flows is built up of several constrictions, which are arranged in parallel to each other in the conduit. Said device may optionally include a bypass section arranged in parallel to the constriction(s). Furthermore, valves may be disposed in the bypass section at locations upstream or downstream of each constriction. In addition to that, a control element for adjusting the steam flow is present upstream of the pressure sensor.

In one specific embodiment of the device, said device is characterized by a processing unit for adjusting the passage of the adjustable constriction(s) and/or for connecting or disconnecting the valve(s) in the constrictions and/or the bypass section and/or for adjusting the control element on the basis of signals obtained from the pressure sensor and/or the adjustable constriction in the consumers' conduit and/or the pressure sensor or the temperature sensor in the network of steam conduits. This enables a more automated measurement and/or control of the steam flow in a conduit.

The invention will now be explained in more detail with reference to a drawing, which successively shows in:

> Figure 1 an embodiment of a device according to the invention;
> Figure 2 another embodiment of a device according to the invention;
> Figures 3a - 3d exemplary embodiments of a constriction; and in
> Figure 4 an automated embodiment of a device according to the invention.

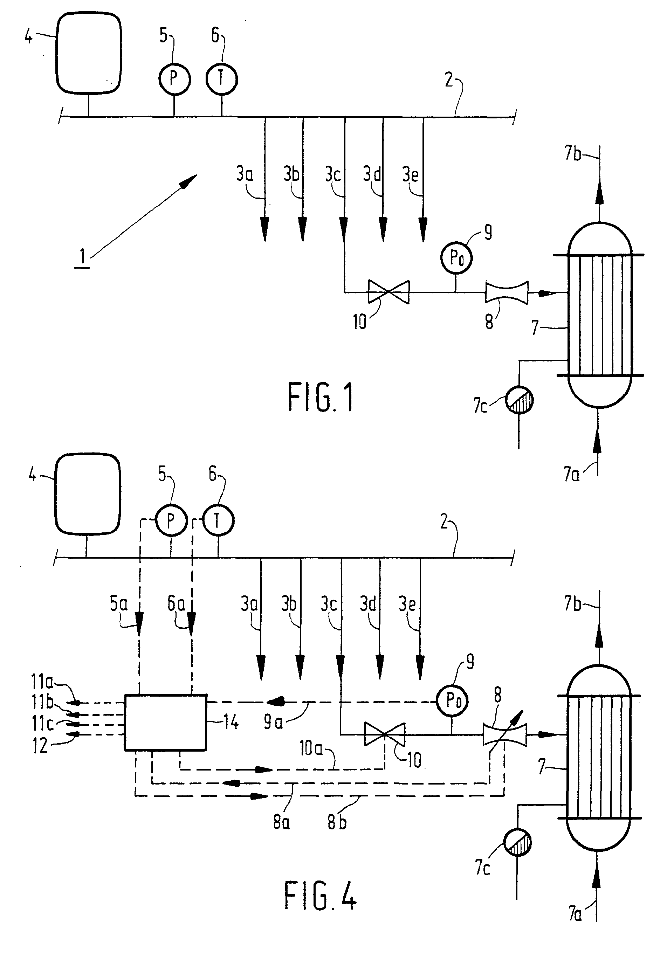

Figure 1 shows a network of steam conduits 1, which is for example used in the production of preserves in the vegetable and fruit processing industry. The network of steam conduits 1 consists of a steam conduit 2, from which discharge pipes 3a - 3e branch off at several locations for use by steam consumers. The supply of steam in the network of steam conduits can be carried out by a steam boiler 4, for example. In this boiler the steam to be consumed is produced, which steam is subsequently carried to the consumers' conduits 3a - 3e via steam conduit 2.

A steam consumer may for example be a heat exchanger 7, which includes an ingoing process line 7a and an outgoing process line 7b, which heat exchanger is fed with steam that can be tapped from the network of steam conduits via a consumers' conduit 3c. The heat exchanger 7 may also be fitted with a condensation drain 7c.

The generation of steam in steam boiler 4 requires energy, and consequently it is a costly process. For efficiency and safety reasons the network of steam conduits 1 is insulated, in order to prevent losses resulting from heat exchange with the environment and prevent injury to persons. Furthermore it is desirable for financial and social reasons that the steam consumer 7 utilizes the steam that is supplied as efficiently as possible. It is in particular important to know whether the amount of steam that is taken off by the steam consumer 7 per unit time (the steam flow) corresponds to its actual steam requirement.

According to a method for measuring the flow of steam flowing through a conduit that is known already, a pressure difference across a measuring flange, measuring tube or pressure sensor is measured. Measuring the local pressure and the temperature of the steam as well makes it possible to derive the steam flow from said measured values. As already explained in the introduction, a measuring method of this kind is costly, since several sensors are used and several measurements need to be carried out. Furthermore, such a method is characterized by a quadratic relation between the flow and the measured pressure difference, and because the dynamic pressure of the steam is measured, the measurement is susceptible to breakdowns.

The method and the device according to the invention for measuring the steam flow do not exhibit these drawbacks. The measuring device according to the invention comprises a constriction 8, which is disposed in the consumers' conduit 3c. In addition to that, the device comprises a pressure sensor 9 and a control element 10 for adjusting the steam flow. The constriction is so dimensioned that the critical rate continuously prevails in the constriction. When the consumption of steam is low, the pressure at the inlet of the constriction will be 2 bar, for example. When control element 10 is opened further, the steam flow will increase and the pressure $P_0$ at the inlet of the constriction will increase proportionally; when the control element is completely open, the inlet pressure will be 10 bar, for example, which is the pressure that the boiler supplies. The amount of steam has increased by a factor of 5 in that case.

The measuring principle is based on the insight that the value p*v (product of absolute pressure and specific volume) is independent of the local pressure or temperature in the network of conduits as long as there is no transfer of heat from the steam to the environment.

Since the entire network of conduits 1 is insulated, there can be no heat exchange with the environment; only at the location of the steam consumer 7 does the steam give off heat.

The known value p*v of the steam being supplied to the network and the geometry of the constriction make it possible to determine the steam consumption on the basis of the steam pressure on the inlet side of the constriction. The pressure sensor at the inlet of the constriction may be graduated, which makes it easy to read the steam flow. The optional pressure sensor and/or temperature sensor 5, 6, respectively, can be used for verifying whether the steam boiler indeed delivers the specified steam condition.

The steam that is passed through the constriction 8 before reaching the steam consumer 7, reaches the critical velocity in said constriction. Upstream thereof a pressure sensor 9 is disposed in consumers' conduit 3c, by means of which sensor the inlet pressure $P_0$ is measured just before the constriction 8, for example by reading it from a graduation. The measured value $P_0$ can be converted with the known value p*v (product of absolute pressure and specific volume) on the inlet side of the network into a flow value of the steam flowing through the constriction 8, which flow value equals the consumption of steam by the steam consumer 7. Optionally, the pressure difference across the constriction 8 can be measured by means of a pressure sensor (not shown), which is disposed downstream of the constriction 8 in the consumers' conduit 3c, in order to determine whether the steam indeed flows through constriction 8 at the critical velocity.

As a result of the linear connection between the inlet pressure $P_0$ and flow of steam through the constriction, the consumption of steam by a steam consumer 7 can be easily and accurately determined by means of a simple pressure measurement $P_0$. Said measurement enables the detection of defects, such as leakage of steam in the condensation drain 7c, or of the (in)efficiency of the steam consumer. In addition to that the flow measurement can be used for passing on the costs of the steam consumption to the consumer. More in general it can be stated that the measurement makes it possible to control the steam consumption. Besides, this measuring method is not susceptible to breakdowns.

Disposed in consumers' conduit 3c is furthermore a control element 10, which makes it possible to adjust the flow to steam consumer 7, for example on the basis of the temperature of the outgoing process flow 7b.

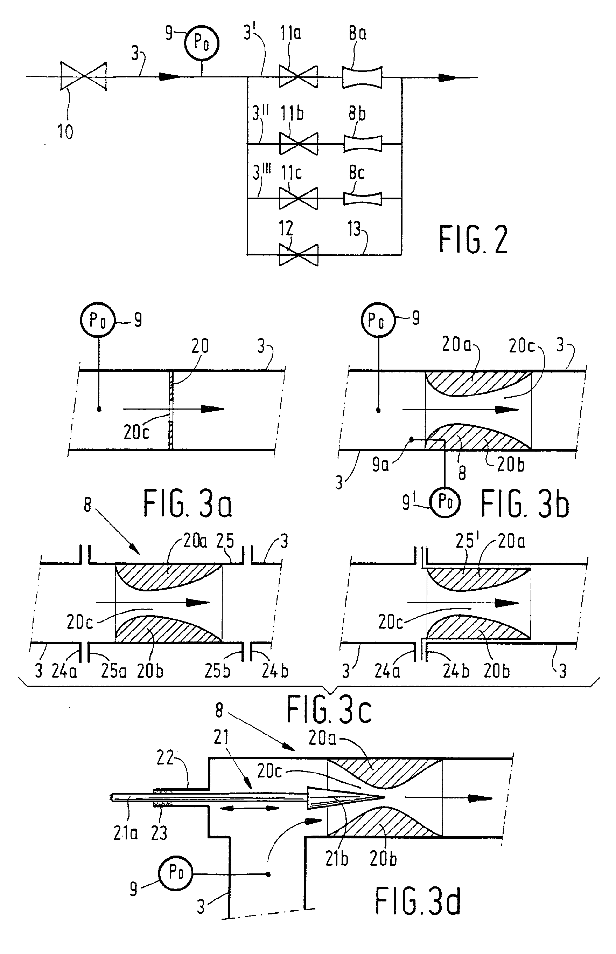

Figure 2 is a partial view of the network of steam conduits 1 of Figure 1, wherein another embodiment of the measuring device according to the invention is used. Several constrictions 8a-8c are arranged in parallel to each other in consumers' conduit 3. Valves lla-llc are disposed upstream of each constriction 8a-8c. Upstream of said parallel-connected constrictions 8a-8c, a pressure sensor 9 and a control element 10 are mounted in the consumers' conduit again. The constrictions 8a-8c may be identical to each other, but they may also have different shapes. One or more branches 3' - 3 '" can be selectively connected or disconnected by means of valves 11a-11c. This makes it possible to use the measuring device according to the invention for various measuring applications.

The use of several constrictions 8a-8c that can be connected or disconnected independently of each other makes it possible to choose between different measuring ranges. By using several constrictions simultaneously it becomes possible to enlarge the measuring range. In addition to that, said several parallel-connected constrictions 8a-8c can be utilized for enlarging the total amount of steam that is passed.

In all measuring situations the inlet pressure $P_0$ is measured on the inlet side of the constrictions 8a-8c, which may or may not be linked together, by means of pressure sensor 9 during operation. Said measured value $P_0$ is converted into a flow value of the steam flowing through constrictions 8a-8c.

Optionally, the measuring device may comprise a bypass 13 arranged in parallel to constrictions 8a-8c, in which conduit a valve 12 is mounted. After all, it is conceivable that in certain operating conditions a steam flow that falls outside the measuring range is required. If it is furthermore not necessary to measure this steam flow, the steam flow being passed can be increased since the additional steam is led directly to the steam consumer 7 through the bypass 13.

Figures 3a-3d show various embodiments of a constriction 8. Figure 3a shows a constriction 8 in its simplest form. The constriction consists of a restriction 20 provided with a passage 20c.

In contrast to Figure 3a, wherein constriction 8 is made up of a plate-shaped restriction 20, the constriction 8 of Figure 3b has a more specific contour 20a-20b defining a passage 20c. Contour 20a-20b imparts such a flow profile to the steam that flows on the inlet side and the outlet side of the passage 20c that the pressure difference across constriction 8 is reduced. Upstream of the constriction 8, a pressure sensor 9 is disposed in the consumers' conduit 3 again. The control element 10 is not shown in Figures 3a-3d, although it is present. Possibly the pressure sensor, indicated 9', can be disposed in the constriction 8, wherein the pressure measuring point 9a of the pressure sensor 9' disposed in the constriction is present at the inlet side of the constriction 8. In this latter embodiment the constriction 8 and the pressure sensor 9' form one assembly, which may have advantages when mounting and reversing the same or when carrying out maintenance work. It will be understood that the constriction 8 of Figure 3a may also be configured to have the contour 20a-20b as shown in Figure 3b.

Figure 3c shows a few ways of fitting the constriction into the conduit. Constriction 8 is configured as a pipe section 25 including flanges 25a and 25b, or it may consist of an insert 25', which is fitted between existing flanges. Pipe section 25 can be mounted in consumers' conduit 3, which is to this end provided with mating flanges 24a and 24b. This construction enables simple reversal of the constriction 8, in order to exchange it for another pipe section 25 comprising a differently shaped constriction 8. This makes it possible to carry out flow measurements in another measuring range, for example. In addition to that, pipe section 25 makes it possible to carry out maintenance in a simple manner.

Figure 3d shows yet another embodiment of constriction 8, in this case in an adjustable version thereof. Also in this embodiment the constriction 8 may have a specific contour 20a-20b, by means of which a specific and desired flow profile is created. The adjustability of the constriction is provided by the mandrel 21, which consists of a conical valve body 21b. Valve body 21b can be moved up and down in passage 20c (indicated by arrows) by means of a valve stem 21a, which projects from the consumers' conduit 3 via a bore 22 provided with a seal 23.

The movement of valve stem 21a and valve body 21b can take place in a well-known manner, for example electrically, mechanically or pneumatically, or by means of the steam in the steam conduit, or manually. The adjustability of constriction 8 makes it possible to obtain another measuring range for measuring the steam flow.

In one specific embodiment of the adjustable constriction 8 the position of the valve body 21 is adjusted, making use of auxiliary energy, in such a manner that a pressure difference across constriction 8 is adjusted. The flow of the steam is derived from the position of the valve body in combination with the value p*v of the steam and the inlet pressure $P_0$ in that case. Said auxiliary energy may consist of manual power, steam, air or electricity.

In another specific embodiment of the valve body 21b is adjusted, making use auxiliary energy, in such a manner as to achieve a desired steam flow through the constriction 8. The position of the valve body 21b is thereby adjusted by comparing the measured flow (on the basis of the position of the valve body, the value p*v and the inlet pressure) with the desired flow.

Figure 4 shows an automated embodiment of the measuring device according to the invention. The reference numerals of the parts shown in Figure 4 correspond to those used for the identical parts in Figure 1. In this embodiment the device according to the invention includes a processing unit 14. The optional pressure and temperature sensors 5 and 6 (for possible correction of the value p*v) as well as the inlet pressure sensor 9 and the adjustable constriction 8 may be ordinary, graduated sensors, which can be manually read, therefore. In that case the operating staff needs to input the measured values into the processing unit 14 by hand.

Sensors 5, 6, 8 and 9 may also be more sophisticated sensors, however, which convert the measured pressure P and $P_0$, the temperature T and the position of constriction 8, respectively, into an analog or digital signal, which is read by the processing unit via signal lines 5a, 6a, 8a and 9a. Processing unit 14 is capable of automatically converting the received signals into a steam flow value, which can be visually displayed and be read by the operating staff.

In addition to that, processing unit 14 can be used as a controller for adjusting the constriction 8, which is represented as an adjustable constriction in Figure 4. Thus, a desired measuring range of the adjustable constriction can be adjusted in dependence on the required control principle. Furthermore, processing unit 14 can function as a flow controller by controlling, on the basis of signals 5a, 6a and 9a, the position of the control element 10 disposed in consumers' conduit 3c by means of a control signal 10a or the position of the adjustable constriction 8 by means of control signal 8b. Moreover, processing unit 14 is capable of connecting or disconnecting one or more of the constrictions 8a-8c and the bypass 13 that are shown in Figure 2, via a number of additional outgoing signal lines 11a-11c and 12, in dependence on the operating conditions by opening or closing the respective valves 11a-11c and 12.

In one embodiment the pressure drop across the adjustable constriction 8 is measured in order to verify whether the pressure drop is sufficiently large, so that the flow measurement will be in the linear range. If the pressure drop is too low, as a result of which the flow measurement will take place outside the linear range, the adjustment of the adjustable constriction will be corrected on the basis of the measured pressure drop.

In one specific embodiment the pressure drop across the constriction is measured in order to verify whether the pressure drop is sufficiently large, so that the flow measurement will be in the linear range. In that case a signal will be delivered to the operating staff. In another embodiment comprising an adjustable constriction the pressure drop across the constriction is measured in order to verify whether the pressure drop is sufficiently large, so that the flow measurement will be in the linear range. If the pressure drop is smaller than required for the linear range, the adjustment of the constriction will be corrected on the basis of the measured pressure drop.

The processing unit 14 may be a PLC control unit or a standard PC or other electronic network. Generally networks that are already available will be used.

It will be understood that it is possible with the method and the device according to the invention to measure a steam flow in an effective and accurate manner, using simple, inexpensive and robust parts and only one local pressure measurement. The various embodiments make it possible to use the method and the device in a very large measuring range. As a result of the linear relation between the steam flow and the measured inlet pressure, this measuring principle is accurate over a large range and not susceptible to breakdowns, a problem that does occur when other measuring principles are used.

## Claims

1. A method for measuring the flow of steam flowing through a conduit for use by one or more steam consumers, which consumers' conduit forms part of a network of steam conduits built up of one or more insulated steam conduits, in which network the value p*v (product of absolute pressure and specific volume) of the steam is known at at least one random location, which method is characterized by the steps of passing the steam through a control element for adjusting the steam flow and through a constriction in the consumers' conduit, measuring the steam pressure on the inlet side of said constriction and determining the flow of the steam flowing through the constriction on the basis of the measured steam pressure and the value $p^*v$ of the steam that is known at a random location.

2. A method according to claim 1, characterized in that the value p*v of the steam in the network of conduits is determined by measuring the prevailing pressure and/or temperature at at least one location.

3. A method according to claim 1 of 2, characterized in that the value p*v of the steam is preferably determined on the basis of the steam condition near a steam generating device that supplies steam to the network of steam conduits.

4. A method according to claim 1, wherein the value p*v of the steam that is introduced into the network of steam conduits is constant in time, characterized in that the steam pressure measured before the constriction is represented on a graduation, which directly shows the steam flow.

5. A device for measuring the flow of steam flowing through a conduit according to any one or more of the preceding method claims, which conduit, together with at least one steam supply conduit, forms part of a network of steam conduits, characterized in that said device comprises at least one constriction that can be fitted into the conduit, and a pressure sensor that can be disposed in the conduit at a location upstream of said constriction, as well as a control element for adjusting the steam flow.

6. A device according to claim 5, characterized in that said device furthermore includes a pressure sensor and/or a temperature sensor, which are disposed in the network of steam conduits.

7. A device according to claim 5 of 6, characterized in that said constriction is in the form of a conduit section to be fitted into the conduit.

8. A device according to claim 7, characterized in that said constriction and said pressure sensor form an assembly.

9. A device according to at least one of the claims 5 - 8, characterized in that the passage of said constriction is adjustable.

10. A device according to claim 9, characterized in that the constriction includes a valve body, which is movable within said constriction.

11. A device according to at least one of the claims 5 - 10, characterized in that said device is built up of several constrictions, which are arranged in parallel to each other in the conduit.

12. A device according to at least one of the claims 5 - 11, characterized in that said device furthermore includes a bypass section arranged in parallel to said constriction(s).

13. A device according to claim 12, characterized in that a valve is disposed upstream or downstream of each constriction and/or in said bypass section.

14. A device according to at least one of the claims 5 - 13, characterized in that said device furthermore comprises a processing unit for adjusting the passage of the adjustable constriction(s) and/or for connecting or disconnecting the valve(s) in the constrictions and/or the bypass section and/or for adjusting the control element on the basis of signals obtained from the pressure sensor and/or the adjustable constriction in the consumers' conduit and/or the pressure sensor or the temperature sensor in the network of steam conduits.

15. A device according to at least one of the claims 5 - 14, characterized in that a pressure gauge is provided downstream of said constriction.

16. A network of steam conduits for transporting steam to one or more consumers' conduits via at least one steam supply conduit, characterized in that at least one device according to at least one of the claims 5 - 15 is disposed in said network for measuring the flow of steam flowing through a consumers' conduit.

FIG.1

FIG.4

FIG. 2

FIG. 3a

FIG. 3b

FIG. 3c

FIG. 3d

**European Patent Office**

## EUROPEAN SEARCH REPORT

Application Number

EP 01 20 0010

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 031 465 A (REDUS CLIFFORD L) 16 July 1991 (1991-07-16) | 1-3,5-8, 15,16 | G01F1/36 G01F1/44 |
| Y | * column 3, line 48 - column 8, line 13; figures 1,2 * | 9,10 | G01F1/86 |
| Y | US 5 880 378 A (BEHRING II KENDRICKS A) 9 March 1999 (1999-03-09) * column 1, line 19 - line 56; figures 1,2 * | 9,10 | |
| A | US 4 574 643 A (SCOTT DONALD S  ET AL) 11 March 1986 (1986-03-11) * column 3, line 47 - column 8, line 30; figures 1,2 * | 1,5 | |
| A | US 5 564 306 A (MILLER CHARLES E) 15 October 1996 (1996-10-15) * column 3, line 56 - column 6, line 60; figure 1 * | 1,5 | |

TECHNICAL FIELDS
SEARCHED      (Int.Cl.7)

G01F

The present search report has been drawn up for all claims

| Place of search | Date of completion of the search | Examiner |
|---|---|---|
| THE HAGUE | 15 May 2001 | Boerrigter, H |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

**ANNEX TO THE EUROPEAN SEARCH REPORT
ON EUROPEAN PATENT APPLICATION NO.**                    EP 01 20 0010

This annex lists the patent family members relating to the patent documents cited in the above–mentioned European search report.
The members are as contained in the European Patent Office EDP file on
The European Patent Office is in no way liable for these particulars which are merely given for the purpose of information.

15-05-2001

| Patent document cited in search report | | Publication date | Patent family member(s) | | Publication date |
|---|---|---|---|---|---|
| US 5031465 | A | 16-07-1991 | NONE | | |
| US 5880378 | A | 09-03-1999 | NONE | | |
| US 4574643 | A | 11-03-1986 | NONE | | |
| US 5564306 | A | 15-10-1996 | AU<br>WO | 2556295 A<br>9532405 A | 18-12-1995<br>30-11-1995 |

EPO FORM P0459

For more details about this annex : see Official Journal of the European Patent Office, No. 12/82